# EUROPÄISCHE PATENTANMELDUNG

(11) **EP 1 947 805 A1**
(43) Veröffentlichungstag der Anmeldung: **23.07.2008**
(21) Anmeldenummer: 07124156.6
(22) Anmeldetag: 28.12.2007
(51) Int. Cl.: H04L 12/24, H04L 29/08

(54) **Automatische Überwachung und Steuerung von Füllständen**

(30) Priorität: 16.01.2007 DE 102007002351; 16.01.2007 US 885040 P
(71) Anmelder: VEGA Grieshaber KG, 77709 Wolfach (DE)
(72) Erfinder: Oehler, Thomas, 77723, Gengenbach (DE); Fichter, Jürgen, 77761, Schiltach (DE); Harter, Franz, 78730, Lauterbach (DE); Faist, Fridolin, 77709, Oberwolfach (DE)
(74) Vertreter: Kopf, Korbinian Paul

(57) **Zusammenfassung**

Die vorliegende Erfindung betrifft ein Bestandsführungssystem zur automatischen Überwachung und Steuerung von Füllständen oder Druckzuständen, welches eine bidirektionale Kommunikation zwischen den einzelnen Feldgeräten mit einem Zentralsystem ermöglicht. Die bidirektionale Kommunikation findet gemäß einem Ausführungsbeispiel der vorliegenden Erfindung mit Hilfe eines Webclients über das Internet statt, so dass ein breitbandiger Datenaustausch ermöglicht wird. Die Verwaltung der Messdaten erfolgt zentral und automatisch.

## Beschreibung

### Technisches Gebiet

Die vorliegende Erfindung betrifft die Bestandsführung und Organisation von Lieferprozessen im Bereich der Füllstandsmessung oder Druckmessung. Insbesondere betrifft die Erfindung ein Bestandsführungssystem zur automatischen Überwachung und Steuerung von Füllständen oder Druckzuständen und ein Verfahren zur automatischen Überwachung und Steuerung von Füllständen oder Druckzuständen mit einem derartigen Bestandsführungssystem.

### Hintergrund der Erfindung

Heutzutage können die Füllstände von Behältern oder Silos unter Nutzung von Füllstandsensoren bestimmt werden und die Messwerte über Feldbusverbindungen an übergeordnete Leitsysteme übertragen werden. Anschließend kÖnnen die Messwerte innerhalb der lokalen Netzwerke visuatisiert werden. Auch kann heutzutage die Erfassung von Stückgütern mittels RFID (Radio Frequency Identification) durchgeführt werden. Ebenso existieren verschiedene Logistik-Tools, die anhand vorliegender Bestandsdaten Zukunftsprognosen und Rentabilitätsbetracbtungen anstellen. Auch bieten diese Systeme Unterstützung bei der Automatisierung verschiedener wiederkehrender Geschäftsprozesse, wie z. B. dem Austausch von Geschäftsdokumenten. Für die webbasierte Abrufung von Bestandsdaten sind im Allgemeinen Browser-seitige Erweiterungen notwendig, wie z. B. die Installation einer Java Runtime Library, um eine grafische Aufbereitung durchzuführen.

Die bisherigen Werkzeuge decken allerdings jeweils nur einen Teilbereich ab und verfügen nicht über Datenschnittstellen, die es erlauben würden, die Systeme zu einer vollständig geschlossenen Supply Chain Management Funktionskette zusammenzuführen. Bei der bisherigen Nutzung der Werkzeuge interessierte stets nur ein Teilaspekt aus der Supply Chain Managementkette. Für die grafische Darstellung von Bestandsdaten über Internetzugriff waren bisher Browser-seitige Erweiterungen erforderlich, wie z. B. die Installation einer Java Runtime Library. Dies hat den Nachteil, dass in der Praxis häufig Kompatibilitätsprobleme zwischen Java-Script und verwendeter Runtime auftreten.

### Darstellung der Erfindung

Es ist eine Aufgabe der vorliegenden Erfindung, eine verbesserte Bereitstellung von Messwerten und Daten über das Internet zu gewährleisten.

Gemäß einem Ausführungsbeispiel der vorliegenden Erfindung wird ein Bestandsführungssystem (= Gesamtsystem) zur automatischen Überwachung und Steuerung von Füllständen oder Druckzuständen angegeben, wobei das Bestandsführungssystem eine Bestandserfassungseinheit (= Sensoren + Auswertgerät) zur Erfassung von Füllstandsdaten oder Druckdaten, ein Zentralsystem (= Web-VV Server Software) und eine Kommunikationseinheit (= Auswertgerät, ggf. kombiniert mit externem Modem), die der Bestandserfassungseinheit zugeordnet ist, zur Übertragung der Füllstandsdaten oder Druckdaten an das Zentralsystem und zum Empfang von Steuerdaten oder Regeldaten vom Zentralsystem, jeweils über das Internet, aufweist, und wobei das Zentralsystem zur zentralen Verwaltung und Aufbereitung der Füllstandsdaten oder Druckdaten ausgeführt ist.

Das erfindungsgemäße Bestandsführungssystem ist also in der Lage, Bestandsdaten (nämlich Füllstandsdaten oder Druckdaten) zu erfassen und über eine Kommunikationseinheit an ein Zentralsystem zu übertragen. Die Übertragung erfolgt hierbei über das Internet. Eine serielle Übertragung über eine Modemverbindung ist nicht erforderlich. Vielmehr wird zur Umgehung dieses "Flaschenhalses" das breitbandige Internet verwendet. Die Option, die Verbindung über DFÜ-Verbindungen unter Nutzung des PPP Protokolls (also serielle, paketorientierte Verbindungsvarianten über Telefonnetze, demnach auch Modems oder Router) vorzunehmen, ist ebenfalls vorgesehen.

Im Zentralsystem erfolgt dann eine Verwaltung und Aufbereitung der Bestandsdaten. Weiterhin kann das Zentralsystem mit der Kommunikationseinheit und somit mit der Bestandserfassungseinheit kommunizieren, beispielsweise eine Messwertabfrage triggern oder ein Feldgerät parametrieren.

Es ist somit eine breitbandige bidirektionale Kommunikation zwischen weltweit verteilten Feldgeräten (Bestandserfassungsgeräten, also Sensoren) und einem zentralen Messwertmanagementsystem (Zentralsystem) gegeben.

Gemäß einem weiteren Ausführungsbeispiel der vorliegenden Erfindung ist das Bestandsführungssystem zur automatischen Erfassung und Übertragung der Füllstandsdaten oder Druckdaten ausgeführt.

Die Interaktion mit einem Nutzer ist nicht erforderlich. Vielmehr können die Daten vom Zentralsystem automatisch abgefragt werden, beispielsweise zu entsprechenden voreingestellten Zeitpunkten oder auf Basis einer Auswertung vergangener Ereignisse (Historie).

Gemäß einem weiteren Ausführungsbeispiel der vorliegenden Erfindung weist die Bestandserfassungseinheit zumindest ein Bestandserfassungsgerät ausgewählt aus der Gruppe bestehend aus einem Füllstandsensor zur Erfassung von Füllstandsdaten, einem Drucksensor zur Erfassung von Druckdaten und einem Identifikationssensor zur Erfassung von Stückdaten auf.

Bei dem Identifikationssensor kann es sich beispielsweise um einen RFID Sensor handeln.

Gemäß einem weiteren Ausführungsbeispiel der vorliegenden Erfindung ist die Kommunikationseinheit in einem entsprechenden Bestandserfassungsgerät integriert.

Es können mehrere weltweit verteilte Bestandserfassungsgeräte vorgesehen sein, welche jeweils eine individuelle Kommunikationseinheit (wahlweise extern oder integriert) aufweisen. Auf diese Weise kann ein zentral verwaltetes Netzwerk von Feldgeräten bereitgestellt werden, welches als Kommunikationsmedium das Internet verwendet.

Gemäß einem weiteren Ausführungsbeispiel der vorliegenden Erfindung sind die Kommunikationseinheit und das Zentralsystem zur Übertragung der Füllstandsdaten oder Druckdaten an das Zentralsystem über eine LAN-Verbindung ausgeführt (Local Area Network-Verbindung).

Gemäß einem weiteren Ausführungsbeispiel der vorliegenden Erfindung weist die Kommunikationseinheit zur Übertragung der Füllstandsdaten oder Druckdaten einen Webelient auf.

Beispielsweise ist die Kommunikationseinheit derart ausgebildet, dass sie einen an einem ersten Interface empfangenen Messwert mittels des Webclients an ein zweites Interface weiterleitet und dort bereitstellt.

Ein Webclient ist eine Softwarekomponente, die üblicherweise über ein Netzwerk (z. B. dem Internet) mit einem Webserver kommuniziert. Meist verwendet ein Webclient für die Kommunikation mit dem Webserver das sog. Hypertext Transfer Protocol (HTTP). Im vorliegenden Zusammenhang soll unter einem Webclient auch ein Prozess zu verstehen sein, der als eigenständige Einheit oder integriert in einem Gesamtsystem auf einem Prozessor ausgeführt wird und die Kommunikation zwischen zwei Systemen steuert. Die Steuerinformation für das Verhalten des Webclients wird einer "gespeicherten Software" entnommen.

Auch kann die Steuersoftware (hier spricht man von Applikation) vom Webclient getrennt sein. Bei dem Webclient handelt es sich also um die Software-Komponente, die von einer Applikation aufgerufen wird um eine http-Verbindung zu einem Webserver aufzubauen und den Datenaustausch vorzunehmen. Ob und wann der Webclient bemüht wird, obliegt einzig und allein der Applikation, also der "gespeicherten Software".

Der Webclient kann beispielsweise nach der Durchführung einer Messung erkennen, dass ein gültiger Messwert vorliegt. Er kann den Messwert, der über ein erstes Interface des Kommunikationsmoduls bzw. der Kommunikationseinheit bereitgestellt wird, nach einer internen Verarbeitung des Messwerts auf der Kommunikationseinheit an eine Datenbank über ein zweites Interface bereitstellen. Der Messwert bzw. weitere Informationen, die mit der Messung in Verbindung stehen, beispielsweise Geräte- und Adressidentifikationsinformationen des Messgerätes, die Uhrzeit der Messung oder die Dauer einer Messung, können dabei direkt in die Datenbank bzw. in eine Speichereinrichtung der Datenbank übertragen werden. Die Datenbank befindet sich zum Beispiel in dem Zentralsystem. Die Messwerte oder die anderen Informationen werden dorthin über das Internet Übertragen.

Durch die Verwendung eines Webclients und der damit zur Verfügung stehenden Bestätigungsmechanismen für eine Datenübertragung kann der Erfolg einer Messwertübertragung überwacht werden und im Fehlerfall kann von dem Kommunikationsmodul (Kommunikationseinheit) entsprechend reagiert werden. Beispielsweise könnte bei einem Fehler durch eine fehlerhafte Übertragung, welche durch Übertragungsstörungen verursacht sein kann, eine Wiederholung der Sendung der Informationen durchgeführt werden.

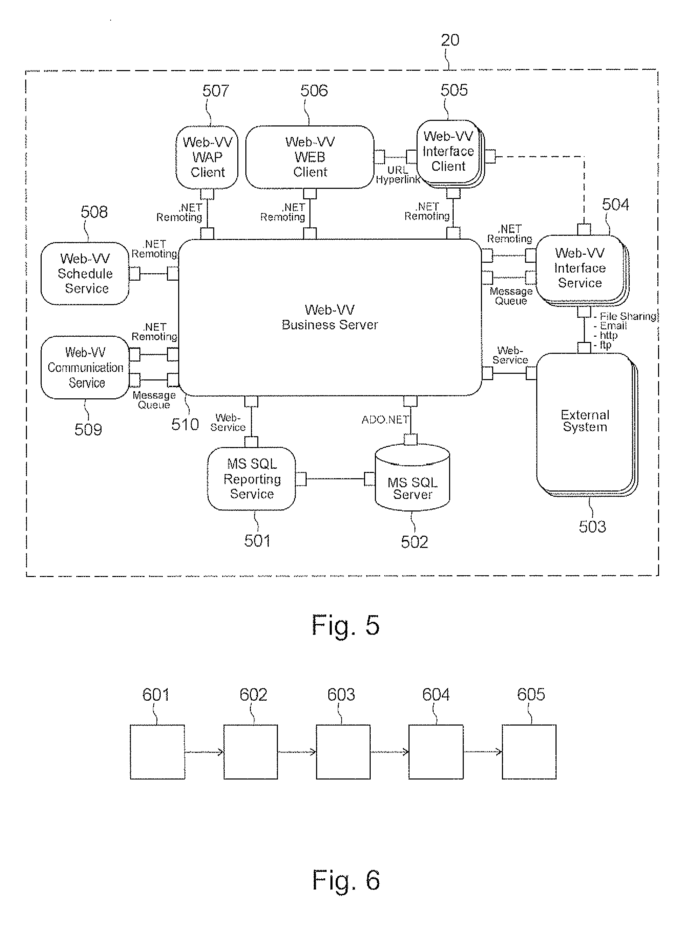

Gemäß einem weiteren Ausführungsbeispiel der vorliegenden Erfindung weist das Zentralsystem einen Webserver mit nachgeschalteten Softwarekomponenten auf, wobei die Softwarekomponenten zur Entgegennahme und Speicherung der Füllstandsdaten oder Druckdaten und/oder der weiteren Informationen von weltweit verteilten Bestandserfassungsgeräten ausgeführt sind. In Figur 5 ist diese Funktionalität in den Blöcken 506 (Web-VV WEB Client), 509 (Web-VV Communication Service), 510 (Web-VV Business Server) und 502 (MS SQL Server) dargestellt. 506 beschreibt konkret das Kommunikationsinterface in Richtung Kommunikationseinheit. 506 repräsentiert u. a. die Funktionalität des Webservers und die des Webclients.

Die Softwarekomponenten sind, gemäß einem weiteren Ausführungsbeispiel der vorliegenden Erfindung, als Web-VV Softwarekomponenten ausgeführt. Hierdurch kann eine vollständige Integration verschiedener Werkzeuge zu einer geschlossen Supply Chain Managementkette ermöglicht werden, indem ein speziell für diesen Zweck entwickeltes Softwareprogrammprodukt "Web-VV" der Firma VEGA verwendet wird. Web-VV kann als Bindeglied die Bestandsinformationen von weltweit installierten Messgeräten entgegennehmen. Die weitere Verarbeitung kann zentral verwaltet werden.

Gemäß einem weiteren Ausführungsbeispiel der vorliegenden Erfindung ist der Webserver zur Nutzung einer Script-Sprache zur Entgegennahme und Speicherung der Füllstandsdaten oder Druckdaten ausgeführt.

Die Beschreibung eines Interfaces über eine Script-Sprache kann eine flexible Anpassung an einen Kommunikationspartner der Kommunikationseinrichtung ermöglichen. Die Kommunikationseinheit kann beispielsweise zur Kommunikation mit einer Datenbank bestimmte Informationen bereitstellen. Die Anforderungen der Art, Reihenfolge und Anzahl der zu übertragenden Informationen kann sich ändern. Durch die Verwendung bzw. Beschreibung eines Interfaces mittels eines Scripts, das zum Beispiel auf die Kommunikationseinheit ladbar ist und beispielsweise von der Kommunikationseinheit und/oder dem Zentralsystem ausführbar ist, kann eine flexible Anpassung an die Datenbank ermöglicht werden.

Gemäß einem weiteren Ausführungsbeispiel der vorliegenden Erfindung umfasst die Script-Sprache ein HTTP-Protokoll. Gemäß einem weiteren Ausführungsbeispiel der vorliegenden Erfindung weist die Softwarekomponente eine webbasierte Konfigurationsoberfläche auf, welche den externen Zugriff durch einen berechtigten Benutzer erlaubt.

Somit können weltweit verteilte berechtigte Benutzer auf einfache Art und Weise direkt über das Internet auf die Bestandsdaten der zentral verwalteten Feldgeräte zugreifen.

Gemäß einem weiteren Ausführungsbeispiel der vorliegenden Erfindung umfasst das Bestandsführungssystem weiterhin eine Materialverwallungs- und Logistiksteuerung zur Weiterverarbeitung der gespeicherten Füllstandsdaten oder Druckdaten.

Die Kopplung des Zentralsystems an die Materialverwaltungs- und Logistiksteuerung kann beispielsweise über standardisierte Schnittstellen, wie z. B. der sog. OPC-Schnittstelle (OLE for Process Control) über Webservices oder über eine SQL-Verbindung zur Datenbank erfolgen.

Die im Zentralsystem gespeicherten Bestandsdaten können an die nachgeschaltete Materialverwaltungs- und Logistiksteuerung, welche innerhalb oder außerhalb des Zentralsystems angeordnet sein kann, übertragen werden. Die Materialverwaltungs- und Logistiksteuerung kann als reine Softwarekomponente ebenfalls auf dem Web-VV Server installiert sein. Es ist aber auch möglich, die beiden Systeme über ein lokales Netzwerk auch auf unterschiedlichen PCs oder Servern zu integrieren. Des weiteren besteht die Möglichkeit, die Materialverwaltungs- und Logistiksteuerungssoftware komplett getrennt von der Web-VV Serversoftware an einem anderen Ort der Welt über Internetverbindung zu betreiben.

Gemäß diesem weiteren Ausführungsbeispiel der vorliegenden Erfindung ist also die Materialverwaltungs- und Logistiksteuerung von dem Web-VV Server örtlich getrennt und kommuniziert mit dem Web-VV Server über die Internetverbindung.

Gemäß einem weiteren Ausführungsbeispiel der vorliegenden Erfindung ist die Malerialverwaltungs- und Logistiksteuerung auf dem Web-VV Server installiert.

Gemäß einem weiteren Ausführungsbeispiel der vorliegenden Erfindung wird ein Verfahren zur automatischen Überwachung und Steuerung von Füllständen oder Druckzuständen mit einem Bestandsführungssystem angegeben, bei welchem Füllstandsdaten oder Druckdaten durch eine Bestandserfasstingseinheit erfasst werden, die Füllstandsdaten oder Druckdaten von einer Kommunikationseinheit, die der Bestandserfassungseinheit zugeordnet ist, an ein Zentralsystem über das Internet übertragen werden, Steuerdaten oder Regeldaten in der Kommunikationseinheit empfangen werden, wobei die Steuerdaten oder Regeldaten vom Zentralsystem über das Internet an die Kommunikationseinheit übertragen wurden, und bei dem Füllstandsdaten oder Druckdaten durch das Zentralsystem verwaltet und aufbereitet werden.

Weiterhin umfasst das Verfahren, gemäß einem weiteren Ausführungsbeispiel der vorliegenden Erfindung, ein Weiterleiten der aufbereiteten oder verwalteten Füllstandsdaten oder Druckdaten an eine Materialverwaltungs- und Logistiksteuerung zur Weiterverarbeitung der Füllstandsdaten oder Druckdaten, Im Folgenden werden mit Verweis auf die Figuren bevorzugte Ausführungsbeispiele der vorliegenden Erfindung beschrieben.

### Kurze Beschreibung der Zeichnungen

Fig. 1 zeigt ein Blockdiagramm eines Bestandsfuhrungssystems gemäß einem Ausführungsbeispiel der vorliegenden Erfindung.
Fig. 2 zeigt ein Blockdiagramm eines Bestandsführungssystems gemäß einem weiteren Ausführungsbeispiel der vorliegenden Erfindung,
Fig. 3 zeigt eine schematische Darstellung eines Web-VV Datenaustauschs über HTTP.
Fig. 4 zeigt eine schematische Darstellung verteilter Web-VV Server gemäß einem Ausführungsbeispiel der vorliegenden Erfindung.
Fig. 5 zeigt Web-VV Funktionsblöcke gemäß einem weiteren Ausführungsbeispiel der vorliegenden Erfindung.
Fig. 6 zeigt ein Flussdiagramm eines Verfahrens gemäß einem Ausführungsbeispiel der vorliegenden Erfindung.

### Detaillierte Beschreibung von exemplarischen Ausführungsformen

Die Darstellungen in den Figuren sind schematisch und nicht maßstäblich.

In der folgenden Figurenbeschreibung werden für die gleichen oder ähnlichen Elemente die gleichen Bezugsziffern verwendet.

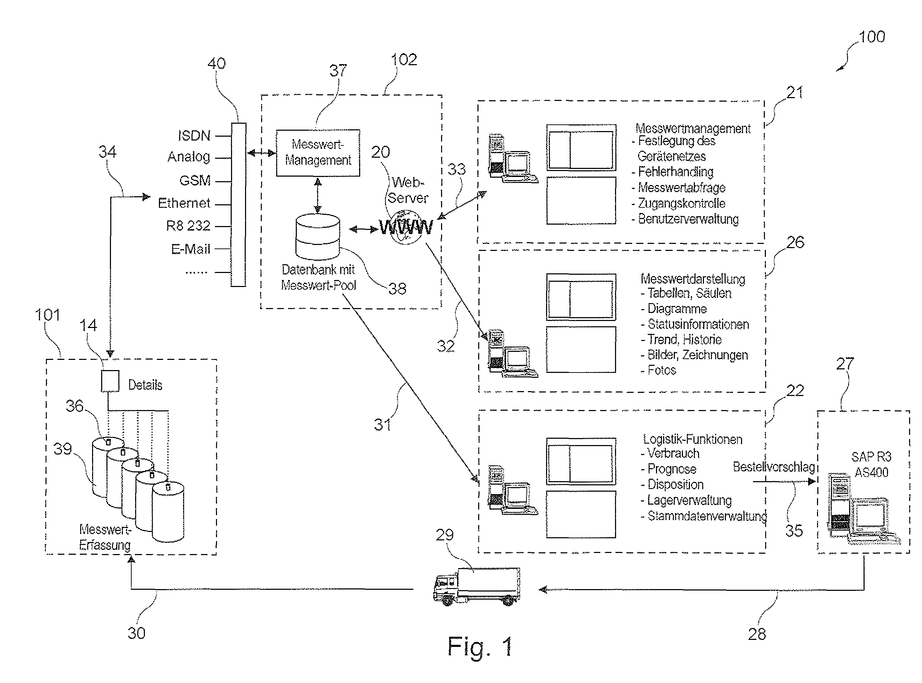

Fig. 1 zeigt eine schematische Darstellung eines Bestandsführungssystems 100 gemäß einem Ausführungsbeispiel der vorliegenden Erfindung. Das Bestandsführungssystem 100 weist eine Bestandserfassungseinheit 101, ein Zentralsystem 102 und ein Messwertmanagementsystem 21, ein Messwertdarstellungssystem 26 und eine Materialverwaltungs- und Logistiksteuerung 22 auf. Die Kommunikation 31, 32, 33, 34 erfolgt jeweils über das Internet.

Insbesondere die Kommunikation zwischen der Bestandserfassungseinheit 101 auf der einen Seite und dem Zentral system 102 auf der anderen Seite ist bidirektional ausgestaltet, so dass ein Zugriff vom Zentralsystem 102, beispielsweise zur gezielten Abfrage der Bestalldsdaten (Druckdaten oder Füllstandsdaten) oder zum Triggern einer Neumessung, ermöglicht wird.

Das Bestandsführungssystem 100 dient der vollständig automatisierten Umsetzung des Supply Chain Managements im industriellen Umfeld, wie beispielsweise im Nahrungsmittelsektor, der chemischen Industrie, im Bereich der Bauindustrie, der Abfallverwertung, und so weiter.

Insbesondere unterstützt das erfindungsgemäße System das Supply Chain Management hinsichtlich des Materialflusses. Das System erstreckt sich auf die automatisierte Erfassung von Füllstandsdaten und/oder Druckdaten von Gütern an unterschiedlichen Standorten, wobei die erfassten Bestandsdaten zentral in der Datenbank 38 des Zentralsystems 102 gespeichert werden. Die gespeicherten Bestandsdaten werden ferner an nachgeschaltete Materialverwaltungs- und Logistiksteuerungen 22 zur Weiterverarbeitung geleitet.

Die Materialverwaltungs- und Logistiksteuerungen 22 werden mit geeigneten Regeln und Anweisungen ausgestattet, so dass, abhängig von den eingehenden Bestandsdaten, u. a. die Aktivierung von Bestellungen ausgelöst werden kann. Somit ist es zu jeder Zeit sichergestellt, dass der Bestand der überwachten Güter nie ein Mindestmaß unterschreitet bzw. keine unnötigen großen Liefermengen aufgebaut werden. Ein benutzerseitiger Eingriff ist hierfür nicht erforderlich. Das System arbeitet automatisch.

Wird registriert, dass der Bestand aufgrund der ausgelösten Lieferung wieder aufgefüllt wurde, so kann ggf. der Versand von Rechnungen ausgelöst werden. Zusätzlich kann auf die gespeicherten Bestandsdaten jederzeit webbasiert Zugriff erfolgen, wobei der Umfang der sichtbaren Daten über Benutzerrechte geregelt wird. Für den webbasierten Zugriff stehen fertig aufbereitete Darstellungen in Tabellen- und Grafikform zur Verfügung.

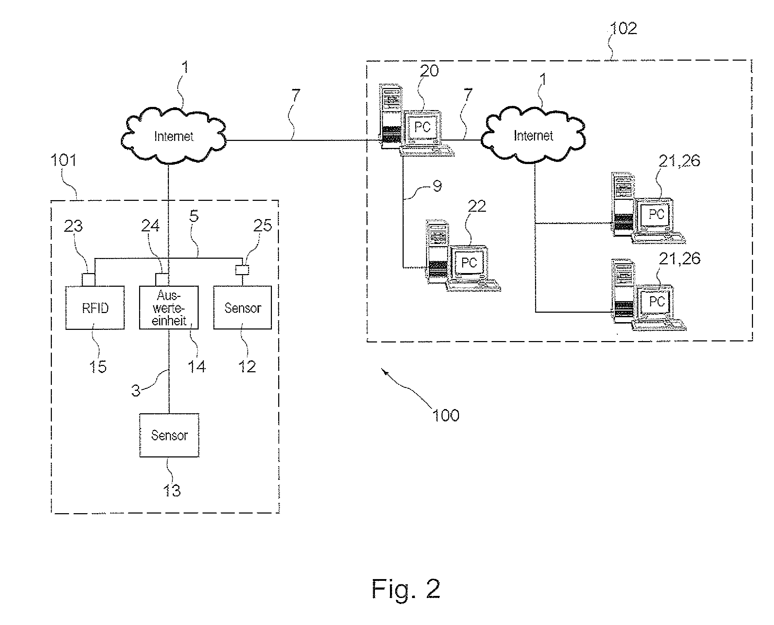

Die Bestandserfassungseinheit 101 umfasst beispielsweise eine Vielzahl von Feldgeräten 36, welche beispielsweise in den Tanks 39 eingebaut sind und welche der Messwerterfassung dienen. Diese Feldgeräte 36 sind beispielsweise mit einer Auswerteeinheit 14 verbunden, welche eine Kommunikationscinheit 24 (siehe Fig. 2) umfasst brw. mit einer solchen Kommunikationseinheit 24 verbunden ist.

Die Kommunikationseinhcit kann die Messdaten über das Internet 34 an das Zentralsystem 102 übertragen. Beispielsweise ist hierfür der Einsatz von ISDN, analogen Telefonverbindungen, GSM, GPRS, Edge, DSL oder anderer Breitbandverbindungen vorgesehen (siehe Bezugszeichen 40). Grundsätzlich können alle Verbindungsvarianten, die eine Paketorientierte Kommunikation von Internetprotokollen unterstützen eingesetzt werden. Sind Kommunikationseinheit und Zentralsystem direkt über eine LAN-Verbindung gekoppelt, so kann auch die direkte Ethernetverbindung genutzt werden.

Das Zentralsystem 102 umfasst ein Messwertmanagement-Modul 37 zur zentralen Verwaltung und Aufbereitung der Füllstands- oder Druckdaten und eine Datenbank 38 mit einem Messwert-Pool, in welcher die Messwerte gespeichert werden können. Weiterhin ist ein Webserver 20 vorgesehen, über welchen eine Kommunikation zwischen den Materialverwaltungs- und Logistiksteuerungen 22, einem externen Messwertmanagement 21 und einer oder mehreren externen Messwertdarstellungseinheiten 26 erfolgt.

Das Messwertmanagement-Modul 21 dient u. a. der Festlegung des Gerätenetzes (Feldgeräte), einer Fehlerbehandlung (Fehlerhandling), einer Messwertabfrage, einer Zugangskontrolle und einer Benutzerverwaltung. Tatsächlich repräsentiert Messwertmanagement 21 lediglich einen Rechner mit Internetbrowser. Die Konfigurationsseiten werden auf dem Rechner im Internetbrowser als Webseiten bearbeitet. Die Seiten selber werden im Zentralsystem 102 erzeugt und die Konfigurationsdaten wieder im Zentralsystem 102 gespeichert.

Das Messwertdarstellungs-Modul 26 dient u. a. einer Darstellung der Messwerte in Form von Tabellen, Säulen oder Diagrammen, einer Darstellung von Statusinformationen, einer Darstellung eines Trends oder einer Historie bezüglich der Messwerte, der Darstellung in Form von Bildern oder Zeichnungen oder Fotos. Das Messwertmanagement 26 repräsentiert z.B. lediglich einen Rechner mit Internetbrowser. Die Messwertdarstellungen werden auf dem Rechner im Internetbrowser als Webseiten angezeigt. Die Seiten selber werden im Zentralsystem 102 auf Basis der in der Datenbank gespeicherten Informationen erzeugt.

Die Materialverwaltungs- und Logistiksteuerung 22 steuert, regelt und prognostiziert den Verbrauch beispielsweise der Füllgüter, und führt eine Disposition, Lagerverwaltung und Stammdatenverwaltung durch. Die Logistiksteuerung 22 stellt eine eigenständige Softwarekomponente dar.

Das Logistik-Tool 22 kann automatisch Bestellvorschläge über eine Verbindung 35 an ein entsprechendes Bestell-Modul 27 abgeben. Bei dem Bestellmodul 27 kann es sich beispielsweise um SAP R3 AS400 handeln. Die Bestelleinheit 27 triggert dann eine Bestandsauffüllung 28, 29, 30 des entsprechenden Lagerbehälters oder Tanks 39 (welcher von dem entsprechenden Feldgerät 36 überwacht wird).

Das System dient der automatisierten Erfassung von Bestandsdaten von Gütern, die weltweit verteilt sein können. Die Bereitstellung der Bestandsdaten kann hierbei sowohl durch die Bestimmung von Füllständen über verschiedenartige Füllstandsensoren erfolgen. Ebenso kann dies auch durch die Erfassung beliebiger Stückgüter, beispielsweise über RFID-Sensoren geschehen.

Ein gemeinsames Merkmal der verwendeten Geräte zur Bestandserfassung ist, dass diese über eine intern angeordnete Einheit (23, 24, 25) (siehe Fig. 2) verfügen, die es erlaubt, nach Eintreten eines zuvor definierten Ereignisses mit einem dafür geeigneten Zentralsystem 102 in Verbindung zu treten und die aktuellen Bestände an dieses Zentralsystem 102 zu übertragen. Die Kommunikationseinheiten 23, 24, 25 können jeweils innerhalb eines entsprechenden Feldgerätes angeordnet sein oder mit diesem in Verbindung stehen.

Für die Übertragung der Bestandsinformationen an das Zentralsystem 102 wird bevorzugt eine Verbindung über das Internet 34 verwendet. Es kann aber auch durchaus eine direkte LAN-Verbindung zum Einsatz kommen. Das Zentralsystem 102 umfasst eine eigens hierfür entwickelte Softwarekomponente, z. B. die Softwarekomponente "Web-VV" der Firma VEGA und wahlweise einen handelsüblichen PC. Bei Bedarf kann auch eine leistungsfähige Serverlösung verwendet werden.

Die Softwarekomponente nimmt die Bestandsdaten der weltweit verteilten Geräte über geeignete Schnittstellen entgegen und speichert die Daten in einer oder mehreren Datenbanken 38 ab. Beispielsweise werden die Bestandsdaten über einen in den Geräten enthaltenen Webclient an einen in der Softwarekomponente enthaltenen Webserver unter Nutzung des HTTP-Protokolls übergeben.

Die Softwarekomponente bietet ferner eine webbasierte Konfigurationsoberfläche, die es berechtigten Personen erlaubt, die eingehenden Bestandsdaten zu den jeweiligen Benutzern und Projekten und/oder Standorten zuzuordnen. Weiterhin bietet die Softwarekomponente Funktionen zum Einrichten und Konfigurieren von Bestandsdarstellungen für weitere Benutzer. Als Bestandsdarstellungen sind alle Darstellungen der erfassten Bestände in grafischer oder tabellarischer Form gemeint, wie z. B. Tabellen mit aktuellen Beständen oder Historiedaten, Balkengrafiken, Kuchengrafiken oder Liniendiagramme.

Zusätzlich können die genannten Darstellungsseiten beliebigen Anwendern über die Vergabe von individuellen Benutzerrechten webbasiert zugänglich gemacht werden. D. h. dass berechtigte Anwender mit Hilfe eines handelsüblichen Internetbrowsers, wie z. B. Microsoft Internet Explorer, von jedem Ort der Welt auf die ihnen zugewiesenen Daten zugreifen können.

Die gespeicherten Bestandsdaten können ferner an nachgeschaltete Materialverwaltungs- und Logistiksteuerungen 22 innerhalb oder außerhalb des Zentralsystems 102 zur Weiterverarbeitung geleitet werden. Die Kopplung des oben genannten Zentralsystems 102 an die Materialverwaltungs- und Logistiksteuerungen 22 kann über standardisierte Schnittstellen, wie z. B. der OPC-Schnittstelle oder über eine SQL- Verbindung zur Datenbank erfolgen. Die Materialverwaltungs- und Logistiksteuerung kann als reine Softwarekomponente ebenfalls auf dem Web-VV Server installiert sein. Es ist aber auch möglich, die beiden Systeme über ein lokales Netzwerk auf unterschiedlichen PCs oder Servern bereitzustellen. Des weiteren besteht die Möglichkeit, die Materialverwaltungs- und Logistiksteuerungssoftware komplett getrennt von der Web-VV Serversoftware an einem anderen Ort der Welt über eine Internetverbindung zu betreiben.

In jedem Fall werden die Materialverwaltungs- und Logistiksteuerungen 22 mit geeigneten Regeln und Anweisungen ausgestattet, so dass, abhängig von den eingehenden Bestandsdaten, u. a. die Aktivierung von Bestellungen ausgelöst werden kann. Somit ist zu jeder Zeit sichergestellt, dass der Bestand der überwachten Güter nie ein Mindestmaß unterschreitet. Wird registriert, dass der Bestand aufgrund der ausgelösten Lieferung wieder aufgefüllt wurde, so kann ggf. der Versand von Rechnungen ausgelöst werden.

Fig. 2 zeigt eine schematische Darstellung der Erfassung der Bestände durch eine Messung von Füllstandsdaten und/oder Druckdaten gemäß einem Ausführungsbeispiel der vorliegenden Erfindung. Die Bestandserfassungseinheit 101 weist hierfür Sensoren 13 (Füllstandsensoren oder Drucksensoren) auf, die ihre Messwerte über eine Verbindung 3 wahlweise anhand einer digitalen Busverbindung oder als analoges 4...20 mA Füllstandssignal an eine übergeordnete Auswerteeinheit 14 weiterleiten. Weiterhin können zusätzliche Sensoren 12 vorgesehen sein, die nicht über die Auswerteeinheit 14 mit dem Internet 1 kommunizieren. Auch können Identifikationssensoren 15 zur Erfassung von Stückdaten vorgesehen sein (beispielsweise RFID-Sensoren).

Den Sensoren 12, 15 bzw. der Auswerteeinheit 14 sind entsprechende Kommunikationseinheiten 23, 24, 25 zugeordnet, welche entweder direkt in den Sensoren 12, 15 bzw. der Auswerteeinheit 14 integriert sind oder mit diesen Geräten über eine entsprechende Übertragungsstrecke (kabelgebunden oder kabellos) kommunizieren.

Über das Internet 1 und eine entsprechende Kommunikationsstrecke 7 werden die Messdaten an das Zentralsystem 102 übertragen. Die Kommunikationsverbindung zwischen dem Zentralsystem 102 und der Bestandserfassungseinheit 101 erfolgt bidirektional. Es können also Messwerte gezielt abgefragt und die einzelnen Geräte gezielt parametriert werden.

Das Zentralstem 102 umfasst einen Web-V V Server 20, welcher über den Kommunikationspfad 7 mit dem Internet 1 verbunden ist. Über das Internet kann ein Datenaustausch mit weltweit verteilten Webbrowsern 21, 26 zur Messwertdarstellung oder zum Messwertmanagement erfolgen.

Weiterhin ist ein Logistik-Tool 22 vorgesehen, beispielsweise in Form eines PCs mit entsprechender Logistik-Software, welches über Datenübertragungsstrecke 9 (ebenfalls drahtgebunden oder drahtlos) mit dem Web-VV Server 20 kommunizieren kann.

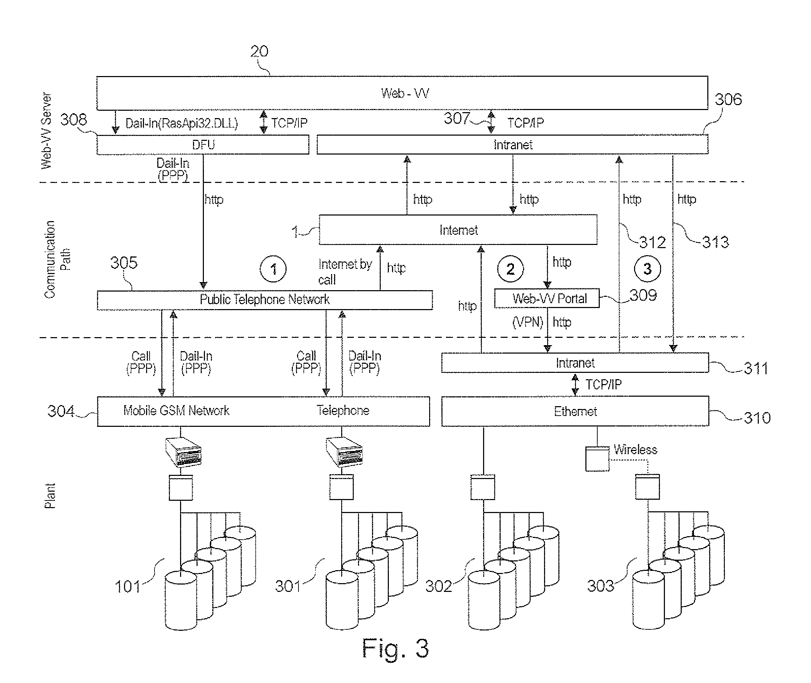

Fig. 3 zeigt eine schematische Darstellung eines Web-VV Datenaustauschs über HTTP. Eine Vielzahl von Bestandserfassungseinheiten 101, 301, 302, 303, die weltweit verteilt sein können, stehen über eine Internetverbindung mit dem Web-VV Server 20 in Verbindung.

Der Datenaustausch erfolgt beispielsweise über ein mobiles GSM-Netzwerk oder Telefon 304, jeweils in Verbindung mit einem öffentlichen Telefonnetzwerk 305. Die Messdaten werden dann über das öffentliche Telefonnetz 305 über das Internet 1 mittels HTTP-Protokoll an ein Intranet 306 übertragen. Das Intranet 306 kommuniziert über TCP/IP 307 mit dem Web-VV 20.

Ebenso kann sich der Web-VV Server 20 über eine DFÜ-Schnittstelle 308 in das öffentliche Telefonnetz 305 einwählen, und auf diese Weise Daten mit den Bestandserfassungseinheiten 101, 301, 302, 303 austauschen.

Ebenso kann ein Web-VV Portal 309 vorgesehen sein, welches über Ethernet 310 und Intranet 311 eine Verbindung der Bestandserfassungseinheiten 302, 303 zum Internet 1 bereitstellen kann.

Weiterhin ist eine direkte HTTP-Kommunikation 312, 313 zwischen dem Intranet 311 und Ethernet 310 auf Seite der Bestandserfassungseinheiten und dem Intranet 306 auf Seite des Web-VV 20 möglich.

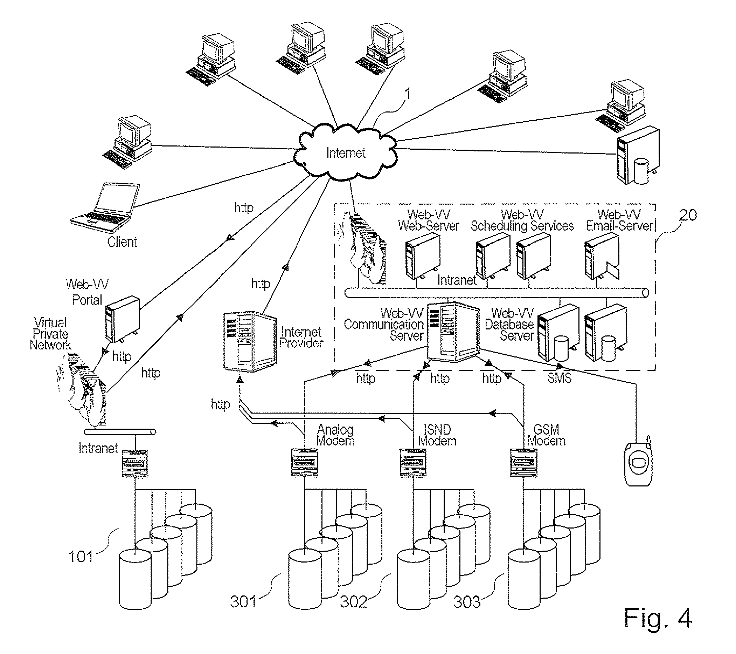

Fig. 4 zeigt schematisch einen verteilten Web-VV-Server 20, der über das HTTP-Protokoll mit den einzelnen Bestandserfassungseinheiten 301, 302, 303, 101 kommuniziert. Aufgrund der Skalierbarkeit der Web-VV Server-Software ist es möglich, je nach Leistungs- und Performanceanforderung an das System, verschiedene Rechnereinheiten zu einem Gesamtsystem zusammenzufassen, wobei jede Rechnereinheit eine Teilaufgabe innerhalb des Gesamtsystems optimal erfüllt.

Folgende Teilaufgaben innerhalb des Systems 20 sind beispielhaft dargestellt:
- Web-VV Web Server
- Web-VV Scheduling Services
- Web-VV E-Mail Server
- Web-VV Communication Server
- Web-VV Database Server

Fig. 5 zeigt die schematische Darstellung der Funktionsblöcke der Web-VV Server Software. Die konsequente Umsetzung der Komponentenprogrammierung gestattet die verteilte Installation auf verschiedenen Rechnereinheiten und somit eine einfache und flexible Anpassung an die gestellte Anforderung und Aufgabe. Web-VV ist im wesentlichen in die nachfolgend beschriebenen Softwarekomponenten aufgeteilt.
- MS SQL Reporting Service 501 beschreibt die Softwarekomponenten, in der die Grafiken, Linien- und Balkendiagramme sowie die Tabellensichten generiert werden.
- MS SQL Server 502 ist die Datenbank des Systems und beinhaltet alle Systemdaten, Benutzerdaten, Gerätedaten, Konfigurationseinstellungen und alle Messdaten.
- External System 503 beschreibt die optionale Anbindung einer externen Software z.B. eines Logistiktools zur Weiterverarbeitung und Auswertung der von Web-V V gesammelten und zur Verfügung gestellten Daten. Der Datenaustausch kann direkt oder über das optionale Web-VV Interface Service 504 erfolgen.
- Web-VV Interface Client 505 dient als standardisierte Schnittstelle für einen beliebigen Web-Browser z.B. Firefox oder Internet Explorer und stellt zusammen mit Web-VV Web Client 506 den Webzugriff auf die Web-VV Bedieneroberfläche dar.
- Web-V V WAP (Wireless Application Protocol) Client 507 stellt einen weiteren, optionalen Zugang zu Web-VV dar.
- Web-VV Scheduler Service 508 steuert und überwacht die internen Abläufe von Web-VV Business Server 510,generiert Meldungen und Nachrichten entsprechend der eingestellten Konfiguration und überwacht den gesamten Datentransfer der zugewiesenen Geräte zu Web-VV.
- Web-VV Communication Service 509 bietet das Eingangsinterface für die Messwerte und Daten der zugewiesenen Geräte.
- Web-VV Business Server 510 ist das Herzstück der Web-VV Server Software und koordinert alle Abläufe und Aktivitäten sowie das Zusammenspiel der einzelnen Komponenten 501 - 509.

Fig. 6 zeigt ein Flussdiagramm eines Verfahrens zur automatischen Überwachung und Steuerung von Füllständen oder Druckzuständen in einem Bestandsführungssystem gemäß einem Ausführungsbeispiel der vorliegenden Erfindung.

In Schritt 601 werden die Füllstandsdaten oder Druckdaten durch eine Bestandserfassungscinheit erfasst und dann in Schritt 602 von einer Kommunikationseinheit an ein Zentralsystem über das Internet Übertragen. In Schritt 603 werden Steuerdaten oder Regeldaten, beispielsweise zum Triggern einer Messung oder zur Parametrierung eines Feldgerätes, vom Zentralsystem ausgesendet und von der Kommunikationseinheit empfangen. Auch die danach neu gemessenen Daten werden an das Zentralsystem Übertragen. Weiterhin findet in Schritt 604 eine zentrale Verwaltung und Aufbereitung der Füllstandsdaten oder Druckdaten durch das Zentralsystem statt. In Schritt 605 werden die aufbereiteten oder verwalteten Daten an eine Materialverwaltungs- und Logistiksteuerung zur Weiterverarbeitung übertragen.

Das erfindungsgemäße System und das erfindungsgemäße Verfahren sind nicht nur innerhalb eines Betriebs zum lückenlosen Supply Chain Management einsetzbar. Vielmehr können sie auch überbetrieblich zur Steuerung des Supply Chain Managements in weitverzweigten Kunden- und Lieferantennetzen Anwendung finden.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Bestandsführungssystem zur automatischen Überwachung und Steuerung von Füllständen oder Druckzuständen, das Bestandsführungssystem (100) umfassend:
eine Bestandserfassungseinheit (101) zur Erfassung von Füllstandsdaten oder Druckdaten;
ein Zentralsystem (102): und
eine Kommunikationseinheit (23, 24, 25), die der Bestandserfassungseinheit (101) zugeordnet ist, zur Übertragung der Füllstandsdaten oder Druckdaten an das Zentralsystem (102) und zum Empfang von Steuerdaten oder Regeldaten vom Zentralsystem (102), jeweils über das Internet;
wobei das Zentralsystem (102) zur zentralen Verwaltung und Aufbereitung der Füllstandsdaten oder Druckdaten ausgeführt ist.

2. Bestandsführungssystem nach Anspruch 1,
wobei das Bestandsführungssystcm zur automatischen Erfassung und Übertragung der Füllstandsdaten oder Druckdaten ausgeführt ist.

3. Bestandsführungssystem nach Anspruch 1 oder 2,
wobei die Bestandserfassungseinheit (101) zumindest ein Bestandserfassungsgerät ausgewählt aus der Gruppe bestehend aus einem Füllstandsensor (13, 14) zur Erfassung von Füllstandsdaten, einem Drucksensor (12) zur Erfassung von Druckdaten und einem Identifikationssensor (15) zur Erfassung von Stückdaten aufweist.

4. Bestandsführungssystem nach Anspruch 3,
wobei die Kommunikationseinheit (23, 24, 25) in einem entsprechenden Bestandserfassungsgcrät (14, 15, 12) integriert ist.

5. Bestandsführungssystem nach einem der vorhergehenden Ansprüche,
wobei die Kommunikationseinheit (23, 24, 2S) und das Zentralsystem (102) zur Übertragung der Füllstandsdaten oder Druckdaten an das Zentralsystem (102) über eine LAN-Verbindung ausgeführt sind.

6. Bestandsführungssystem nach einem der vorhergehenden Ansprüche,
wobei die Kommunikationseinheit (23, 24, 25) zur Übertragung der Füllstandsdaten oder Druckdaten einen Webclient aufweist.

7. Bestandsführungssystem nach Anspruch 6,
wobei das Zentralsystem (102) einen Web Server (20) mit nachgeschalteten Softwarekomponenten aufweist,
wobei die Softwarekomponenten zur Entgegennahme und Speicherung der Füllstandsdaten oder Druckdaten von weltweit verteilten Bestandserfassungsgeräten ausgeführt sind.

8. Bestandsführungssystem nach Anspruch 7,
wobei die Softwarekomponenten als Web-VV Softwarekomponenten ausgeführt sind.

9. Bestandsführungssystem nach einem der Ansprüche 7 oder 8,
wobei der Webserver (20) zur Nutzung einer Script-Sprache zur Entgegennahme und Speicherung der Füllstandsdaten oder Druckdaten ausgeführt ist.

10. Bestandsführungssystem nach Anspruch 8,
wobei die Script-Sprache ein http-Protokoll umfasst.

11. Bestandsführungssystem nach einem der Ansprüche 7 bis 10,
wobei die Softwarekomponente eine webbasierte Konfigurationsoberfläche aufweist, welche den externen Zugriff durch einen berechtigten Benutzer erlaubt.

12. Bestandsführungssystem nach einem der vorhergehenden Ansprüche, weiterhin umfassend:
eine Materialverwaltungs- und Logistiksteuerung (22) zur Weiterverarbeitung der gespeicherten Füllstandsdaten oder Druckdaten.

13. Bestandsführungssystem nach Anspruch 12,
wobei die Materialverwaltungs- und Logistiksteuerung (22) von dem Web-VV Server (20) örtlich getrennt ist und mit dem Web-VV Server (20) über eine Internetverbindung kommuniziert.

14. Bestandsführungssystem nach Anspruch 12,
wobei die Materialverwaltungs- und Logistiksteuerung (22) auf dem Web-VV Server (20) installiert ist.

15. Verfahren zur automatischen Überwachung und Steuerung von Füllständen oder Druckzuständen mit einem Bestandsführungssystem (100), das Verfahren umfassend die Schritte:
Erfassung von Füllstandsdaten oder Druckdaten durch eine Bestandserfassungseinheit (101),
Übertragung der Füfllstandsdaten oder Druckdaten von einer Kommunikationseinheit (23, 24, 25), die der Bestandserfassungseinheit (101) zugeordnet ist, an ein Zentralsystem (102) über das Internet;
Empfang von Steuerdaten oder Regeldaten in der Kommunikationseinheit (23, 24, 25), die vom Zentralsystem (102) über das Internet übertragen werden;
zentrales Verwalten und Aufbereiten der Füllstandsdaten oder Druckdaten durch das Zentralsystem (102).

16. Verfahren nach Anspruch 15, weiterhin umfassend den Schritt:
Weiterleiten der aufbereiteten oder verwalteten Füllstandsdaten oder Druckdaten an eine Materiaiverwaltungs- und Logistiksteuerung (22) zur Weiterverarbeitung der Füllstandsdaten oder Druckdaten.
